# EUROPEAN PATENT SPECIFICATION

(11) **EP 1 170 989 B1**
(45) Date of publication and mention of the grant of the patent: **16.07.2003**
(21) Application number: 00909459.0
(22) Date of filing: 10.03.2000
(51) Int. Cl.: A01K 1/06, A01K 15/04, A01K 1/12

(54) **ANIMAL CONFINEMENT DEVICE**
RÜCKHALTEANLAGE FÜR TIERE
DISPOSITIF SERVANT A MAINTENIR UN ANIMAL EN ENCLOS FERME

(30) Priority: 11.03.1999 GB 9905551
(43) Date of publication of application: 16.01.2002
(73) Proprietor: Taylor, William, Coleraine BT51 4PP County Londonderry Northern Ireland (GB)
(72) Inventor: Taylor, William, Coleraine BT51 4PP County Londonderry Northern Ireland (GB)
(74) Representative: Lunt, Mark George Francis
(86) International application number: PCT/GB00/00837
(87) International publication number: WO 00/053002

(56) References cited:
- WO-A-85/02973
- WO-A-98/19522
- GB-A- 1 558 243
- POLDENVALE LTD.: "Cattle Crushes: Featuring the John Sparkes Automatic Headgate for One Man Operation" , POLDENVALE , GB XP002139417 the whole document

## Description

The present invention relates to an animal confinement device, also referred to as a livestock control device, and in particular to a device for use in conjunction with other livestock retaining devices such as cattle crushes, lamb adopters, milking parlours or stables etc. The device of the present invention is designed for use on farms or in other situations where the control of livestock is required.

Cattle crushes, lamb adopters, milking parlours, stables and other such devices are commonly found on farms where it is desirable to hold an animal firmly in a fixed position. Such devices usually entail restraining the animal by the head or body to allow for example veterinary examination or grooming. However, these devices do not serve to restrain the hind legs of the animals. Consequently any person or other animal in the vicinity of the hind quarters of the animal can be seriously hurt if the animal decides to kick out with its hind legs.

The present invention seeks to address this problem by providing a restraining device in which the animal is restrained by the head and/or the body and is prevented from kicking out its hind quarters.

Accordingly, the present invention provides a confinement device for a four-legged animal, the device comprising a frame to receive the animal and including a floor plate for the rear legs of the animal, characterised in that the floor plate is arranged to be stable only when both rear legs of the animal bear on the plate.

Means to locate the animal's head are preferably provided so as to ensure positioning of the animal's hind legs on the floor plate. Likewise, means to prevent sideways movement of the animal are also preferably provided.

In a preferred embodiment of the device of the current invention the floor plate is pivotable about an axis longitudinal with respect to the direction of the means for preventing sideways movement of the animal.

It is possible that various pivotable mechanisms can be employed for example a single pivotal bar or a row of points creating a pivotal row.

Such head locating means can include for example jaws, as utilised in cattle crushes, or for example adjustable parallel holding bars as used in lamb adopters, although it is apparent that other restraining means could also be used.

In a preferred embodiment of the invention the device further comprises a locking means for preventing movement of the floor plate when the device is not in use and for entry and exit from the device of animals using the device.

In a preferred embodiment of the invention the locking means comprises a bolt positionable below the floor plate to prevent the floor plate from moving when the device is not in use.

The bolt is preferably rotatably positioned below the floor plate by means of a shaft affixed to one end of the bolt.

In yet a further preferred embodiment of the current invention the floor plate further comprises a slot into which the bolt slides thereby preventing the floor plate from moving when not in use.

In a preferred embodiment of the current invention the floor plate is substantially flat.

However, in yet a further preferred embodiment the floor plate is formed into an inverted v-shape.

In a preferred embodiment the device is comprised of metal, and the floor plate is comprised of chequerplate or another suitable non-slip material.

It is also preferred that the floor plate further comprises drainage holes to prevent a build-up of excess waste products.

An alternative embodiment of the current invention provides a portable confinement device for a four-legged animal according to claim 3.

For a clearer understanding of the invention, and to show how the same may be put into effect, specific embodiments of the invention are now described with reference (by way of example) to the following drawings in which:
- Figure 1: is a rear perspective view of a device according to the present invention in use with a cattle crush;
- Figure 2: is like Figure 1 but of an alternative embodiment of the present invention;
- Figure 3: is a cross-section view of a locking mechanism employed in the current invention;
- Figure 4: is a perspective view of a preferred side bar arrangement for a cattle crush employing the present invention;
- Figure 5: is a perspective view of a device according to an alternative embodiment of the present invention in use with a lamb adopter;
- Figure 6: is a perspective view of a portable device in accordance with the present invention; and
- Figure 7: is a front view of the gate of a cattle crush.

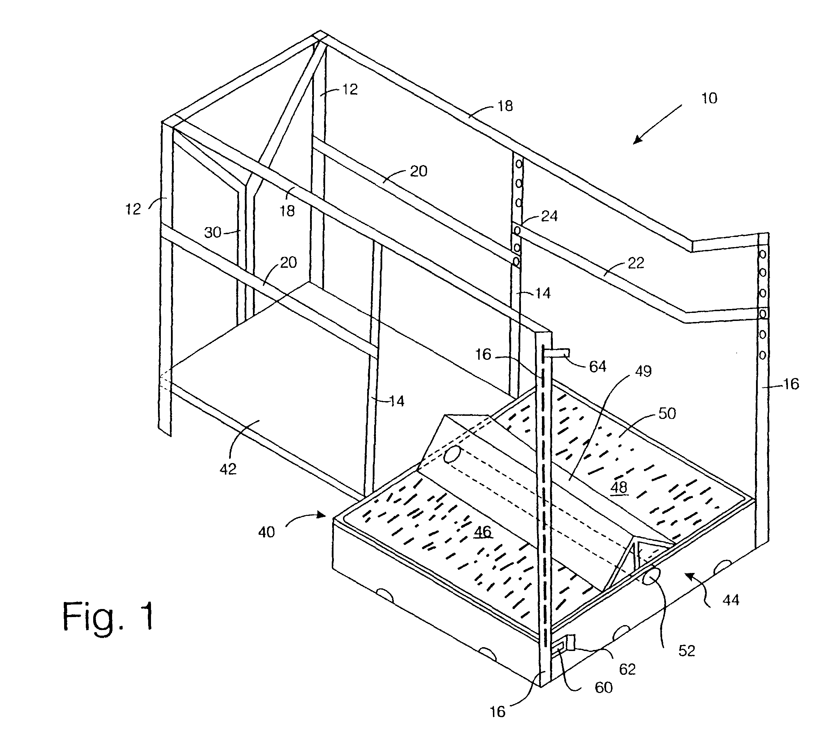

In Figure 1 a conventional cattle crush 10 is shown with upright supports 12, 14 and 16 and side guide rails 18, 20 and 22. The side guide rails 18, 20, 22 are secured to the upright supports 12, 14, 16 by suitable fastening devices 24, such as nut and bolt assemblies. The height of the side guide rails can be altered accordingly by means of the fastening devices depending upon the size of animal in the cattle crush.

The animal stands on the floor 40 of the cattle crush, and is held in position by means of gate crush jaws 30.

When the animal is held in position by the crush jaws 30, its front legs will be in floor area 42, whilst its hind quarters will be located in floor area 44. More specifically the animal's hind feet will be astride floor plate 50 and positioned at 46 and 48 respectively. An optional V-plate 49 is positionable on the plate 50 that serves to keep the animal's feet on either side of a central longitudinal axis of the crush 10.

The floor plate 50 forming part of floor area 44 is pivotally mounted on a pivotal bar 52 which spans the length of the floor plate 50 and which lies along the longitudinal axis of the crush 10.

A bolt 60 located beneath the floor plate 50 holds the floor plate in place and prevents it from rocking.

The bolt 60 is attached to a shaft (not shown) passing through one of the upright supports 16. A lever 64 operates the shaft such that rotational movement of the shaft causes the bolt to move away from or towards the floor plate 50. When positioned directly underneath the floor plate, the bolt rests in a slot 62.

In operation of the device, the bolt holding the floor plate in position is removed from the slot 62 by rotation of the lever 64. Consequently, the floor plate 50 is no longer fixed in position and is free to rock about the pivotal bar 52. The rocking of the floor plate causes the animal to sense that any movement of its hind quarters will lead to an unsettling motion of the floor plate. This has the effect of dissuading the animal from moving and in particular kicking its hind legs at approaching farmers, veterinarians or other animals. Consequently the animal remains calm so that it can receive for example medical attention, be groomed, clipped or mated without posing a threat to any other person or animal.

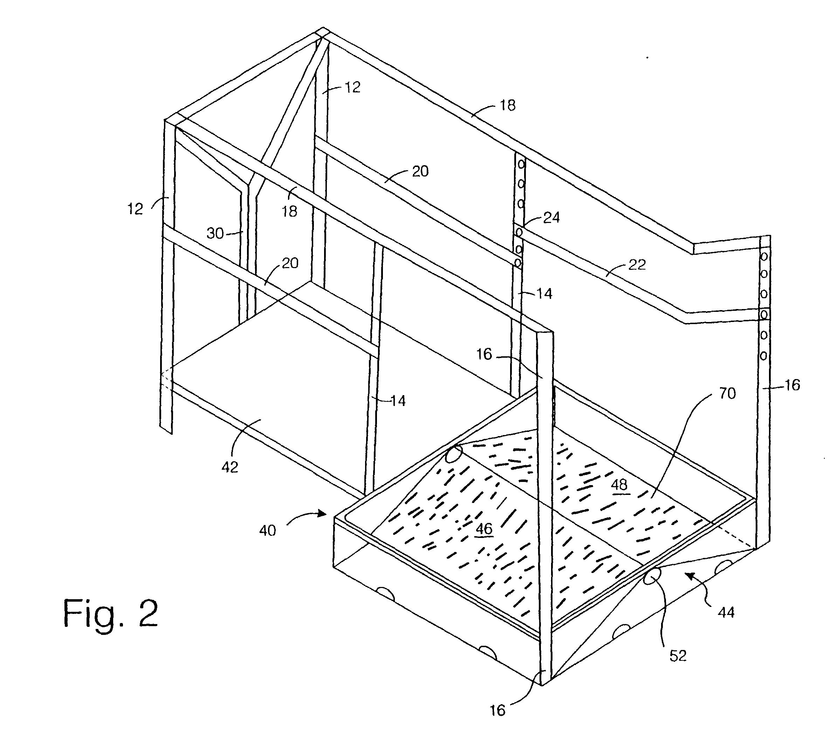

In Figure 2 features common to both Figures 1 and 2 are numbered accordingly.

In the embodiment in Figure 2 there is an added deterrent to stop animals kicking out their hind quarters in the form of floor plate 70. In this second embodiment animals not only have to cope with the rocking action of the floor plate 70 when the bolt is released, but also with the fact that the floor plate 70 is in the shape of an inverted V.

Consequently, the animal not only has to contend with the fact that the floor rocks from one side to the other but also with the fact that the floor is sloping away towards the side rails of the device.

The side rails 18 and 20 are adjustable, depending upon the size of the animal in the device. The rails can accordingly be raised or lowered and also be brought closer together for less rotund animals.

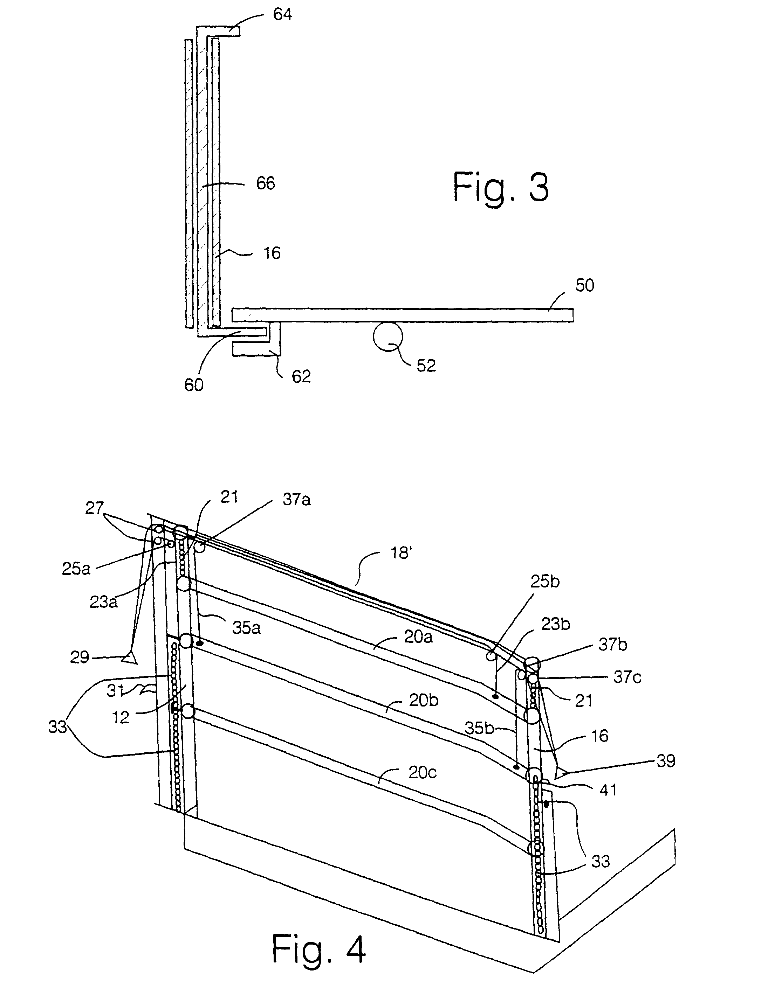

Figure 3 shows a cross-sectional view of a locking mechanism employed in accordance with the current invention and fixed in a locked position. The floor plate 50 is pivotably mounted about the bar 52 and locked into position by means of bolt 60 located within the slot 62. Rotation of a shaft 66 by means of the handle 64 moves the bolt into and out of the locked position. When the bolt resides within the slot 62, the floor plate is prevented from pivoting and the floor remains stable when the animal is stood astride it. However, removal of the bolt from the slot allows the floor plate to pivot freely.

In Figure 4, an alternative arrangement of side bars, made possible by the arrangement of the present invention, is shown. Here, top bar 18' is fixed to end posts 12,16. Rails 20a,b and c, however, are slidable up and down on endposts 12,16. The lower limit of movement of rail 20a is determined by chains 21 which depend from the top of each post 12,16. However, rail 20 a can be raised to just beneath top rail 20 by means of cables 23a,b which loop over pulleys 25a,b respectively, and pully pair 27 to a handle 29. When handle 29 is pulled and looped on hook 31, the rail 20a is raised to its fullest extent.

Similarly, rails 20b,c are limited in their movemoent, upwardly in their case, by chains 33. Cables 35a,b loop over pulleys 37a,b,c and terminate in handle 39, so that when the handle 39 is released from a hook 41, the rails 20,b,c can be lowered towards the ground. Limits can be imposed, by further hooks (not shown) for example on the post 16 over which to loop the handle 39. While such a simple arrangement of ropes, pulleys and chains is perfectly servicable, nevertheless, hydraulic or pneumatic arrangements of a more sophisticated kind could easily be provided. The point to be emphasised is that, by virtue of the floor plate arrangement of the present invention, which unsettles and (paradoxically) calms animals within the cattle crush, the normal provision of substantial side retention of the cattle is no longer essential. Consequently the side rails can be lowered and/or manoeuvred to facilitate side access to the animal without the normally attendant risks either of being kicked or, with incomplete side retention, of the animal sidling away.

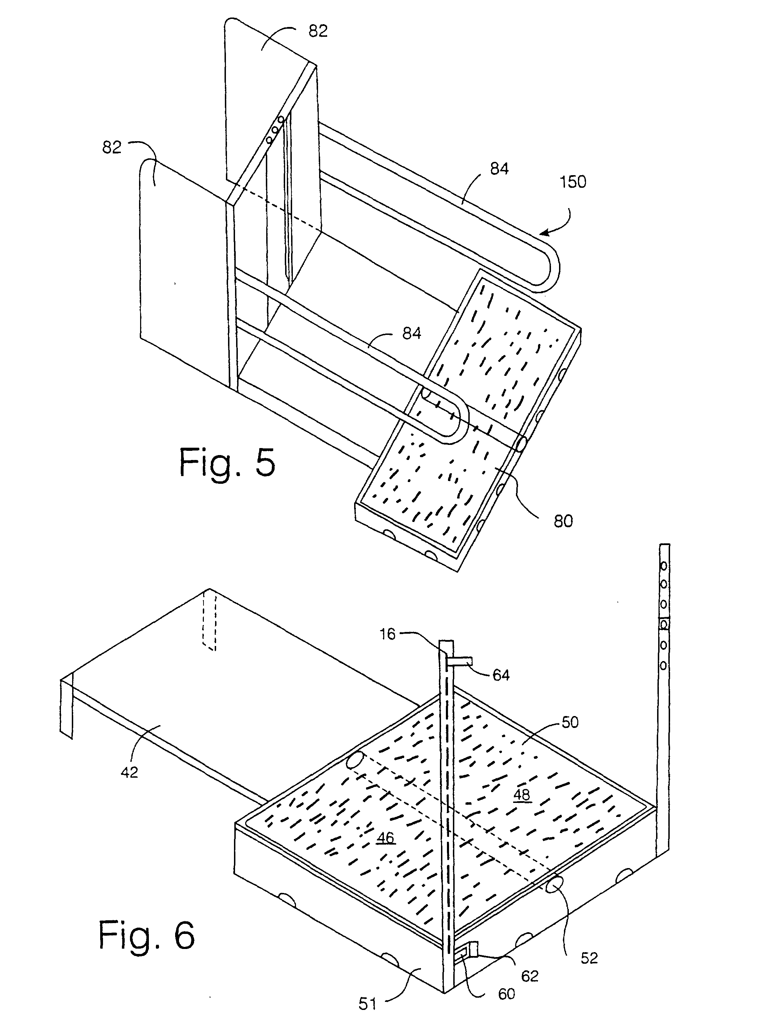

In Figure 5 there is shown another embodiment of the present invention in which a lamb adopter 150 is fitted with a pivotable floor plate 80. Lamb adopters as the name suggests are often used to train a ewe whose own lamb has died to accept an orphaned lamb, or to accept another lamb in addition to it's own. In a lamb adopter, blinker plates 82 prevent a ewe installed in the lamb adopter from seeing an adopted lamb until such time as the lamb inherits the ewe's scent. A lamb needs to feed every few hours and this would not be impossible if the ewe continually kicked the lamb away. Consequently, by employing an embodiment as shown in Figure 5 the lamb is able to feed as required throughout the day or night since any movement by the ewe will cause the floor plate 80 to rock and unnerve the ewe. Side rails 84 are adjustable to suit varying sizes of ewes.

In Figure 6 there is shown an alternative embodiment of the present invention namely a portable confinement device. Again, the features common to Figure 6 and the preceding drawings have been numbered accordingly.

The device of Figure 6 again possesses the pivotable floor plate 50, mounted within a floor staging 51. In use the portable device is installed in a stable or stall into which the animal is to be placed. The device is so designed to substantially span the width of any stall into which it is placed. Varying sizes of the device are envisaged according to the size of stalls or stable required. Furthermore, the portable confinement device may be additionally fitted with further containment means such as jaws or blinker plates. It is also envisaged that the sides of the stable or stall will serve as suitable restraining means to prevent the animal from turning in the stall.

In operation the portable device is positioned in the stall as required and the animal led onto the device. Once the animal is positioned on the device the locking mechanism (60, 64, 62) is released, thereby allowing the floor plate 50 to pivot freely and encourage the animal to keep its hind quarters still. When not required, the device can be removed from the stall and stored conveniently.

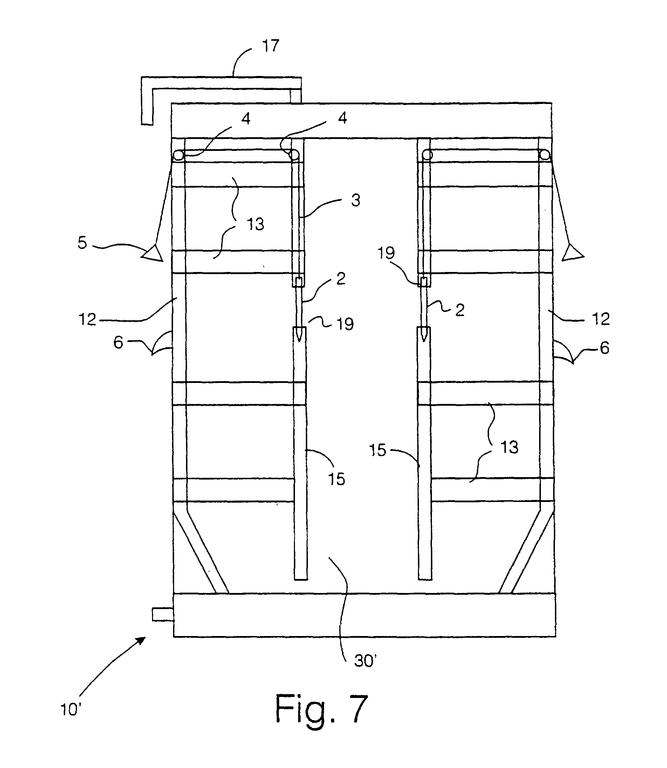

Finally, referring to Figure 7, a cattle crush 10' is shown with a front gate 30'. Cattle crush gates are well known in the agricultural community and comprise two pivot rails 12 which are pivotable in the crush 10' about vertical axes. Horizontal bars 13 connect to middle posts 15. Normally, such posts extend vertically to the full height of the crush 10'.

In use, the gate opens towards the animal entering the crush, but only sufficiently wide to permit passage of the animal's head. The reason for this is so that the animal's shoulders engage the bars and, as the animal pushes forward, the gate leaves 15,13,12 rotate towards one another to a position in which they are aligned, and the posts 15 have their minimum separation, whereby the animal's head is totally confined withdrawal is prevented. A locking handle 17, engages to lock the leaves 15,13,12 in the position shown in Figure 7.

When the animal is to be released, the handle 17 is again operated, releasing the leaves to continue pivoting forward, and open completely in the direction the animal is facing, and permit the animal to leave the crush 30'

The modification of the gate illustrated is in the provision of gaps 19 in the middle posts 15 to permit the passage of horned animals. Bullets 2, on the end of cables 3 passing over pulleys 4, close the gaps 19 if required. Handles 5 can be looped on to hooks 6 formed on the posts 12 to hold the gaps 19 open.

In all cases in which the pivotable floor plate is utilised it is desirable to incorporate drainage holes in the floor plates through which waste products can pass thereby preventing a build-up of urine, manure and any other waste products.

It is also desirable that the pivotable floor plates be made of a suitable non-slip material such as chequerplate.

It is also desirable that the device of the current invention be made of metal or other resilient material capable of withstanding the weight and force exerted by animals upon it.

Whilst the present invention is primarily designed for use on farms, the invention may also find application in other situations where it is desirable to control animals for example in veterinarian practices or zoos.

Furthermore, the present invention may also be utilised during transportation of animals by land, air or sea where it is desirable to keep animals calm and free from stress.

Movement of the device of the present invention will depend upon the size of the device. For example, lamb adopters are typically of a size to allow them to be manhandled without the need for additional machinery. However when moving cattle crushes other machinery such as tractors or fork-lift trucks may be required to aid in the movement of the device.

Alternatively, the device may also be fitted with wheels and braking systems to allow for easy manoeuvering.

## Claims

1. A confinement device (10) for a four-legged animal, the device comprising a frame (12,14,16,18,20,30;84) to receive the animal and including a floor plate (50,70,80) for the rear legs of the animal, **characterised in that** the floor plate is arranged to be stable only when both rear legs of the animal bear on the plate.

2. A device as claimed in claim 1, in which the floor plate is pivotable about an axis (52) longitudinal with respect to an animal received in the frame with its rear legs on the floor plate.

3. A portable confinement device (42,50,51) for a four-legged animal, the device comprising a floor staging (51) to receive the animal and including a floor plate (50) for supporting the rear legs of the animal, **characterised in that** the floor plate is arranged to be stable only when both rear legs of the animal bear on the plate.

4. A device according to claim 3, in which the floor plate is pivotable about an axis (52) longitudinal with respect to the floor staging.

5. A device according to any of claims 1 to 4, further comprising means (30) for locating the head of the animal.

6. A device according to any of claims 1 to 5, further comprising a locking means (60,62,64) for preventing movement of the floor plate when the device is not in use.

7. A device according to claim 6, in which the locking means comprises a bolt (60) positionable below the floor plate.

8. A device according to claim 7, in which the bolt is rotatably positioned below the floor plate by means of a shaft (66) affixed to one end of the bolt.

9. A device according to claim 8, in which the floor plate further comprises a slot (62) into which the bolt slides thereby preventing the floor plate from moving when not in use.

10. A device according to any of claims 1 to 9, in which the floor plate is substantially flat (50,80).

11. A device according to any of claims 1 to 9, in which the floor plate forms (70) or includes an inverted V-shape portion (49) thereof.

12. A device according to any of claims 1 to 11, in which the floor plate further comprises drainage holes for cleaning of the device.

13. A device according to any of claims 1 to 12, wherein the floor plate is metal.

14. A device according to any of claims 1 to 13, in which the floor plate is chequer-plate or other similar non-slip material.

15. A device as claimed in claim 1, or any of claims 2 to 14 when dependent on claim 1, further comprising means (12,14,16,18,20;84) to restrain sideways movement of the animal.

16. A device as claimed in claim 15, in which said side restraining means comprises rails (18,20;84).

17. A device as claimed in claim 16, in which said rails (20,a,b,c) are vertically adjustable to provide access to an animal in the device.

18. A device as claimed in claim 5, or any of claims 6 to 17 when dependent on claim 5, wherein said head locating means comprises a crush gate (30) provided with two pivotable leaves (12,13,15) having a mimimum separation between them when aligned and adapted to pivot in an entry direction to an intermediate extent sufficient to permit passage of the head, but not the shoulders, of an animal for which the crush gate is intended to be employed, and to a full extent in an exit direction to permit passage through the gate and release of the animal.

19. A device as claimed in claim 18, wherein the leaves have gaps (19) formed in them, which gaps are adapted to receive the horns of an animal whose head is passing through the gate (30) when pivoted to said intermediate extent.

20. A device as claimed in claim 19, in which a closure (2) is provided to close said gaps when desired.

21. A device as claimed in claim 20, in which said closure comprises bullets (2) slidable in posts (15) forming part of said leaves.

## Patentansprüche

1. Rückhaltevorrichtung (10) für ein vierbeiniges Tier, wobei die Vorrichtung einen Rahmen (12, 15, 16, 18, 20, 30; 84) zur Aufnahme des Tieres hat, der eine Bodenplatte (50, 70, 80) für die Hinterbeine des Tieres enthält, **dadurch gekennzeichnet, daß** die Bodenplatte dazu ausgestaltet ist, nur stabil zu sein, wenn beide Hinterbeine des Tieres sich auf die Hinterplatte stützen.

2. Vorrichtung nach Anspruch 1, bei der die Bodenplatte schwenkbar um eine Achse (52) ist, die in Längsrichtung in bezug auf ein in dem Rahmen aufgenommenes Tier mit seinen Hinterbeinen auf der Bodenplatte verläuft.

3. Transportable Rückhaltevorrichtung (42, 50, 51) für ein vierbeiniges Tier, wobei die Vorrichtung ein Bodengestell (51) zum Aufnehmen des Tieres aufweist, das eine Bodenplatte (50) zum Unterstützen der Hinterbeine des Tieres umfaßt, **dadurch gekennzeichnet, daß** die Bodenplatte dazu ausgestaltet ist, nur stabil zu sein, wenn beide Hinterbeine des Tieres sich auf die Platte stützen.

4. Vorrichtung nach Anspruch 3, bei der die Bodenplatte um eine Achse (52) in Längsrichtung in bezug auf das Bodengestell schwenkbar ist.

5. Vorrichtung nach einem der Ansprüche 1 bis 4, die weiter eine Einrichtung (30) zum Fixieren des Kopfes des Tieres aufweist.

6. Vorrichtung nach einem der Ansprüche 1 bis 5, die weiter eine Verriegelungseinrichtung (60, 62, 64) aufweist, um die Bewegung der Bodenplatte zu verhindern, wenn die Vorrichtung nicht in Benutzung ist.

7. Vorrichtung nach Anspruch 6, bei der die Verriegelungseinrichtung einen Bolzen (60) aufweist, der unter der Bodenplatte positionierbar ist.

8. Vorrichtung nach Anspruch 7, bei der der Bolzen drehbar unter der Bodenplatte mittels einer Welle (66) gehalten ist, die an einem Ende des Bolzens befestigt ist.

9. Vorrichtung nach Anspruch 8, bei der die Bodenplatte weiter einen Schlitz (62) aufweist, in den der Bolzen gleitet, wodurch die Bewegung der Bodenplatte verhindert wird, wenn sie nicht in Benutzung ist.

10. Vorrichtung nach einem der Ansprüche 1 bis 9, bei der die Bodenplatte im wesentlichen eben (50, 80) ist.

11. Vorrichtung nach einem der Ansprüche 1 bis 9, bei der die Bodenplatte einen umgekehrt V-förmigen Bereich (49) bildet (70) oder enthält.

12. Vorrichtung nach einem der Ansprüche 1 bis 11, bei der die Bodenplatte weiter Abflußöffnungen zum Reinigen der Vorrichtung aufweist.

13. Vorrichtung nach einem der Ansprüche 1 bis 12, wobei die Bodenplatte aus Metall ist.

14. Vorrichtung nach einem der Ansprüche 1 bis 13, bei der die Bodenplatte ein Riffelblech oder ein ähnliches rutschfestes Material ist.

15. Vorrichtung nach Anspruch 1, oder einem der Ansprüche 2 bis 14, wenn abhängig von Anspruch 1, die weiter Mittel (12, 14, 16, 18, 20; 84) zum Beschränken seitlicher Bewegung des Tieres aufweist.

16. Vorrichtung nach Anspruch 15, bei der die seitlichen Beschränkungsmittel Querstäbe (18, 20; 84) auf weisen.

17. Vorrichtung nach Anspruch 16, bei der die Querstäbe (20a, b, c) vertikal verstellbar sind, um Zugang zu einem Tier in der Vorrichtung zu erhalten.

18. Vorrichtung nach Anspruch 5 oder einem der Ansprüche 6 bis 17, wenn abhängig von Anspruch 5, wobei die Kopffixierungseinrichtung eine Käfigtür (30) aufweist, die mit zwei schwenkbaren Türflügeln (12, 13, 15) versehen ist, die einen minimalen Abstand zwischen sich haben, wenn sie ausgerichtet sind, und die dazu ausgestaltet sind, um in eine Eintrittsrichtung in eine mittlere Stellung zu schwenken, die ausreichend ist, um den Durchgang des Kopfes, aber nicht der Schultern eines Tieres zu gestatten, für das die Käfigtür eingesetzt werden soll, und in eine voll ausgestellte Stellung in Ausgangsrichtung zu schwenken, um den Durchgang durch die Tür und die Freilassung des Tieres zu erlauben.

19. Vorrichtung nach Anspruch 18, wobei die Türflügel darin gebildete Lücken haben, wobei die Lücken dazu angepaßt sind, die Hörner eines Tieres aufzunehmen, dessen Kopf durch die Tür (30), wenn sie in die mittlere Stellung geschwenkt ist, geführt wird.

20. Vorrichtung nach Anspruch 19, bei der ein Verschluß (2) vorgesehen ist, um die Lücken, wenn erwünscht, zu schließen.

21. Vorrichtung nach Anspruch 20, bei der der Verschluß Zapfen (2) aufweist, die in Stangen (15) gleiten können, die einen Teil der Türflügel bilden.

## Revendications

1. Dispositif de confinement (10) pour un quadrupède, le dispositif comprenant un cadre (12,14,16,18, 20,30;84) pour recevoir l'animal et comprenant une plaque de plancher (50,70,80) pour les pattes arrière de l'animal, **caractérisé par le fait que** la plaque de plancher est disposée pour être stable seulement lorsque les deux pattes arrière de l'animal portent sur la plaque.

2. Dispositif selon la revendication 1, dans lequel la plaque de plancher est apte à pivoter autour d'un axe (52) longitudinal par rapport à un animal reçu dans le cadre avec ses pattes arrière sur la plaque de plancher.

3. Dispositif de confinement portable (42,50,51) pour un quadrupède, le dispositif comprenant une plate-forme de plancher (51) pour recevoir l'animal et comprenant une plaque de plancher (50) pour supporter les pattes arrière de l'animal, **caractérisé par le fait que** la plaque de plancher est disposée pour être stable seulement lorsque les deux pattes arrière de l'animal portent sur la plaque.

4. Dispositif selon la revendication 3, dans lequel la plaque de plancher est apte à pivoter autour d'un axe (52) longitudinal par rapport à la plate-forme de plancher.

5. Dispositif selon l'une quelconque des revendications 1 à 4, comprenant en outre des moyens (30) pour positionner la tête de l'animal.

6. Dispositif selon l'une quelconque des revendications 1 à 5, comprenant en outre un moyen de verrouillage (60,62,64) pour empêcher le mouvement de la plaque de plancher lorsque le dispositif n'est pas en utilisation.

7. Dispositif selon la revendication 6, dans lequel le moyen de verrouillage comprend un boulon (60) positionnable au-dessous de la plaque de plancher.

8. Dispositif selon la revendication 7, dans lequel le boulon est positionné de façon tournante au-dessous de la plaque de plancher au moyen d'un axe (66) fixé à l'une des extrémités du boulon.

9. Dispositif selon la revendication 8, dans lequel la plaque de plancher comprend en outre une fente (62) dans laquelle le boulon coulisse, empêchant de cette façon la plaque de plancher de se déplacer lorsqu'elle n'est pas en utilisation.

10. Dispositif selon l'une quelconque des revendications 1 à 9, dans lequel la plaque de plancher est sensiblement plate (50,80).

11. Dispositif selon l'une quelconque des revendications 1 à 9, dans lequel la plaque de plancher forme (70) ou comprend une partie (49) de celle-ci en forme de V renversé.

12. Dispositif selon l'une quelconque des revendications 1 à 11, dans lequel la plaque de plancher comprend en outre des trous de drainage pour le nettoyage du dispositif.

13. Dispositif selon l'une quelconque des revendications 1 à 12, dans lequel la plaque de plancher est métallique.

14. Dispositif selon l'une quelconque des revendications 1 à 13, dans lequel la plaque de plancher est une plaque striée ou autre matière non glissante analogue.

15. Dispositif selon la revendication 1, ou selon l'une quelconque des revendications 2 à 14 lorsqu'elles sont dépendantes de la revendication 1, comprenant en outre des moyens (12,14,16,18,20;84) pour restreindre un mouvement de côté de l'animal.

16. Dispositif selon la revendication 15, dans lequel ledit moyen de restriction latérale comprend des rails (18,20;84).

17. Dispositif selon la revendication 16, dans lequel lesdits rails (20, a, b, c) sont ajustables verticalement pour fournir l'accès à un animal dans le dispositif.

18. Dispositif selon la revendication 5, ou selon l'une quelconque des revendications 6 à 17 lorsqu'elles sont dépendantes de la revendication 5, dans lequel ledit moyen de positionnement de la tête comprend une barrière de sécurité (30) dotée de deux battants (12,13,15) aptes à pivoter, ayant une séparation minimale entre eux lorsqu'ils sont alignés et adaptés pour pivoter dans une direction d'entrée dans une mesure intermédiaire suffisante pour permettre le passage de la tête, mais non des épaules, d'un animal pour lequel la barrière de sécurité est destinée à être employée, et dans une pleine mesure dans une direction de sortie pour permettre le passage à travers la barrière et la libération de l'animal.

19. Dispositif selon la revendication 18, dans lequel les battants ont des ouvertures (19) formées dans celle-ci, lesquelles ouvertures sont adaptées pour recevoir les cornes d'un animal dont la tête passe à travers la barrière (30) lorsqu'elle est amenée à pivoter dans ladite mesure intermédiaire.

20. Dispositif selon la revendication 19, dans lequel une fermeture (2) est prévue pour fermer lesdites ouvertures lorsqu'on le désire.

21. Dispositif selon la revendication 20, dans lequel ladite fermeture comprend des billettes (2) aptes à coulisser dans des poteaux (15) faisant partie desdits battants.
